# EUROPEAN PATENT SPECIFICATION

(11) **EP 2 892 848 B1**
(45) Date of publication and mention of the grant of the patent: **14.11.2018**
(21) Application number: 12884216.8
(22) Date of filing: 06.09.2012
(51) Int. Cl.: H01M 8/0234, B29L 31/34, B29K 507/04, B29C 67/24, H01M 8/0239, H01M 8/0243, B29K 61/04, C01B 32/05, C04B 35/532, C04B 35/52

(54) **METHOD OF PROCESSING A POROUS ARTICLE**
VERFAHREN ZUR VERARBEITUNG EINES PORÖSEN ARTIKELS
PROCÉDÉ DE TRAITEMENT D'UN ARTICLE POREUX

(43) Date of publication of application: 15.07.2015
(73) Proprietor: Audi AG, 85045 Ingolstadt (DE)
(72) Inventor: ALLEN, Glenn Michael, Vernon, Connecticut 06066 (US); GRONDA, Steven W., Feeding Hills, Massachusetts 01030 (US); SWANSON, Daniel Thomas, Unionville, Connecticut 06085 (US)
(86) International application number: PCT/US2012/053827
(87) International publication number: WO 2014/039038

(56) References cited:
- WO-A1-98/53514
- WO-A1-2011/062593
- JP-A- H05 251 088
- JP-A- 2001 052 721
- US-A- 4 818 741
- US-A- 6 022 436
- US-A1- 2003 148 164
- US-A1- 2003 148 164

## Description

### BACKGROUND

This disclosure relates to techniques for forming porous articles, such as porous water transport plates for fuel cells.

A porous article, such as a water transport plate, is typically molded from a powdered or granular material. The molding process generally includes placing the powdered or granular material into a mold and consolidating the material under heat and pressure. The article may be carbonized in a further step, or used essentially as-is without carbonization.

US2003/0148164A1 teaches a method for preparation of a fuel cell separator plate. The procedure described therein suggests to form conductive power, conductive carbon fibers and an inert, electrochemically stable binder with good wettable or hydrophilic properties into an molded article. A carbonization step is not disclosed in this procedure.

JP2001/052721A describes a method for preparation of a separator, too. The method comprises the step of molding conductive particles and a non-carbonaceous resin to a molded article. A carbonization step is not disclosed in the procedure described therein.

US2003/148164A1 discloses a "Plate Making Process". This process mixes together conductive powder, conductive fibers and an electrochemically inert binder. Further, the mixture is put into a mold, thereby forming a molded separator or water plate for a fuel cell.

WO 2011/062593A describes a method of processing a porous article comprising the steps mentioned in the preamble of claim 1 of the present invention. This procedure teaches to use different predetermined particle size distribution for the conductive particles, thereby gaining greater control over the properties of formed porous articles. It is still necessary to use accurate parameter settings to process the porous article mentioned therein.

The technical problem is therefore to provide a method of processing a porous article that simplifies the overall production process by allowing for a wider parameter window while keeping a strength requirement.

### SUMMARY

This problem is solved by the method comprising the steps of claim 1 of the present invention.

A method of processing a porous article according to an exemplary aspect of the present disclosure includes distributing a blended powder material including loose electrically conductive particles and loose resin particles into a mold, consolidating the blended powder material within the mold under a molding pressure and a molding temperature into a consolidated article, and selecting the loose resin particles in the distributing step to be within a predefined particle size distribution to control a physical property of the porous article.

A further method of processing a porous article according to an exemplary aspect of the present disclosure includes distributing a blended powder material including loose electrically conductive particles and loose resin particles into a mold, consolidating the blended powder material within the mold under a molding pressure and a molding temperature into a porous consolidated article, carbonizing the resin of the porous consolidated article to form a final porous carbon article and, for a given predefined minimum strength requirement of the porous carbon article and a given process parameter window of the consolidating step that influences the strength of the porous carbon article, expanding the processing parameter window while still meeting the predefined minimum strength requirement by selecting the loose resin particles in the distributing step to be within a predefined particle size distribution.

The various features and advantages of the disclosed examples will become apparent to those skilled in the art from the following detailed description. The drawings that accompany the detailed description can be briefly described as follows.

### BRIEF DESCRIPTION OF THE DRAWINGS

Figure 1 illustrates an example method for processing a porous article.
Figure 2 illustrates another example method for processing a porous article.
Figure 3 illustrates a graph of strength versus density.

### DETAILED DESCRIPTION

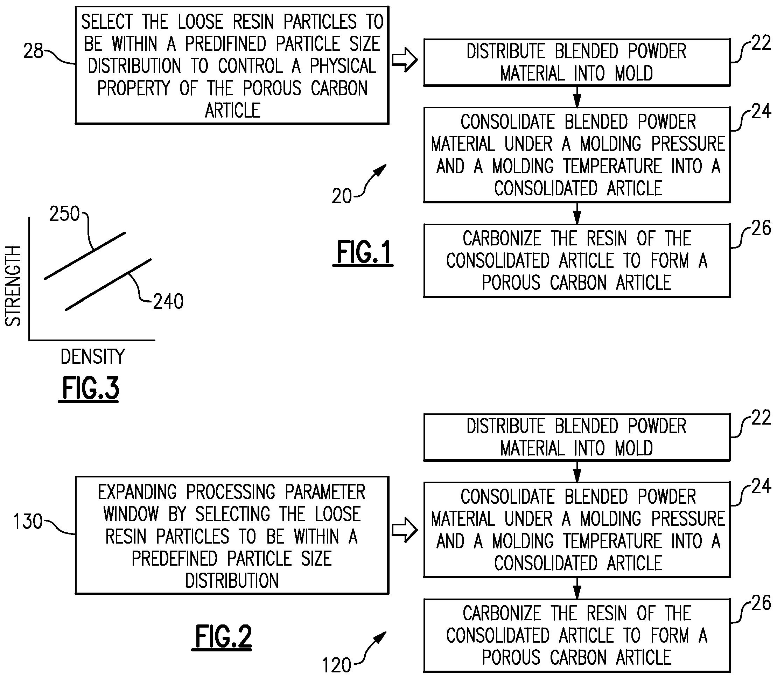

Figure 1 illustrates selected steps of an example method 20 for processing a porous article. It is to be appreciated that the method 20 may be used to form any desirable type of porous article that is molded from a powdered starting resin material. In one example, the porous article is a porous water transport plate, for use in a fuel cell, and includes reactant gas channels on one or both sides.

For reasons that are heretofore unknown, one or more physical properties of porous articles can vary outside of a specified requirement. As an example based on carbon water transport plates, the strength of the plates has been found to vary. A similar phenomenon would be expected for other porous articles. As will be discussed in further detail, it has been discovered that a particle size distribution of the powdered starting resin used to mold porous articles influences one or more physical properties of the porous article. Thus, a particle size distribution is predefined to control a physical property of the porous article, namely the strength.

In the illustrated example, the method 20 includes a distribution step 22, a consolidation step 24, an optional carbonization step 26 and a selection step 28, which will each be described in more detail below.

In one embodiment, the distribution step 22 includes distributing a blended powder material that includes loose electrically conductive particles and loose resin particles into a mold. The consolidation step 24 includes consolidating the blended powder material within the mold under a molding pressure and a molding temperature into a consolidated article. The optional carbonization step 26 includes carbonizing the resin of the consolidated article to form a porous carbon article. In general, the carbonization increases porosity, enhances electrical conductivity and removes contaminates/organics that may be in the resin material.

In further embodiments, the electrically conductive particles are or include graphite particles and the resin particles are or include a thermosetting resin. In a further example, the thermosetting resin is a phenolic resin. In a further example, the blended powder material includes only the loose electrically conductive particles and loose resin particles, along with any impurities in the materials. In one example, the blended powder material has a composition of 65-95% weight of the loose electrically conductive particles and a balance of the loose resin particles. In a further example, the blended powder material has a composition of 80-85% weight of the loose electrically conductive particles and a balance of the loose resin particles.

The particle size distribution of the loose resin particles used in the blended powder material influences a physical property or properties of the porous carbon article. As an example, the particle size distribution of the loose resin particles influences the strength of the porous carbon article. In a further example, the strength is the bending strength of the porous carbon article. In this regard, the selection step 28 includes selecting the loose resin particles in the distribution step 22 to be within a predefined particle size distribution in order to control the physical property or properties of the porous carbon article.

The predefined particle size distribution includes 95% by volume of the loose resin particles being 22 micrometers or less in average diameter, the standard deviation is 6 micrometers or less. In another example where the predefined particle size distribution includes 95% by volume of the loose resin particles being 10 micrometers or less in average diameter, such as 6.5 micrometers in average diameter, the standard deviation is 4 micrometers or less. The general trend of particle size distribution is that smaller average particles size distribution increases the strength of the porous article.

In a further embodiment of the distribution step 22 of the method 20, the blended powder material is distributed into a mold that will be used to form the porous consolidated article. As can be appreciated, the mold may include a cavity that is contoured in the shape of the desired final porous article, but is not limited to any particular shape. In the example of a water transport plate that has channels on one or both sides, the mold is contoured to form the channels. Alternatively, the channels are machined into the porous consolidated article or into the article after carbonization.

After distributing of the blended powder material into the mold, the mold is closed with a suitable cover or a mating mold tool, and subjected to a molding pressure and a molding temperature to form a consolidated article. In one embodiment, the molding pressure is approximately 0.5-1000 pounds per square inch (approximately 3.5-6895 kilopascals). The molding pressure may be maintained throughout the heating of the mold, or alternatively, the pressure may be adjusted over a pressure profile while heating the mold. In a further example, an initial molding pressure is 40 pounds per square inch (approximately 276 kilopascals), and the pressure is increased to 560 pounds per square inch (approximately 3861 kilopascals).

As the temperature of the mold increases, the loose resin particles of the blended powder material soften and liquefy. The liquefied resin flows under the molding pressure and uniformly distributes the resin material among the electrically conductive particles. In one example that utilizes a thermosetting resin, upon further heating a curing temperature is reached, at which time the resin cross-links. The consolidated article may be held for a predetermined amount of time at the curing temperature to complete the curing process. For phenolic thermosetting resins, the curing temperature may be 130-200°C. The pressure may then be released and either the consolidated article removed from the mold or the mold cooled before removing the consolidated article.

Once cured, the consolidated article is then carbonized in the carbonization step 26. The temperature and atmospheric conditions used for the carbonization step 26 may vary depending upon the type of resin used. In one example where the resin is a phenolic resin, the carbonization temperature is greater than 800°C, such as about 900°C, and the treatment atmosphere is an inert, non-oxidizing atmosphere, such as argon. Under such conditions, the resin thermally decomposes or "chars" into a carbonaceous material such that the electrically conductive particles and the carbonaceous material (char) are bonded together in the desired shape of a porous carbon article.

Optionally, the porous carbon article is further subjected to post-treatment processing as appropriate for the given article. In one example, if the porous carbon article is a porous water transport plate for use in a fuel cell, the article may be subsequently treated to apply a hydrophilic material through the porosity of the article to facilitate moisture distribution through the plate. As an example, the hydrophilic material includes tin oxide that is applied using a known wet chemistry acid technique.

The selection of the loose resin particles to be within the predefined particle size distribution to control the physical property, namely the strength, of the porous carbon article allows enhancement of the physical property or, alternatively, expansion of one or more processing parameter windows within the method 20. Turning to Figure 2, a modified method 120 is shown, which is similar to the method 20 shown in Figure 1 with respect to the distribution step 22, the consolidation step 24, and the carbonization step 26. In this example, the method 120 includes an expansion step 130 in which one or more processing parameter windows are expanded in the consolidation step 24. That is, by selecting the loose resin particles of the blended powder material to be within the predefined particle sized distribution the property or properties of the porous carbon article are enhanced. However, with regard to minimum property requirements, instead of enhancing the property, one or more processing parameter windows may be expanded while still meeting the minimum requirement and thereby allow greater latitude in the design of the process and cost reduction, for example.

As an example for a given predefined minimum strength requirement of the porous carbon article and a given process parameter window of the consolidation step 22 that influences the strength of the porous carbon article, the processing parameter window is expanded while still meeting the predefined strength requirement by selecting the loose resin particles of the blended powder material to be within the predefined particle size distribution.

In a further example, the processing parameter window that is expanded includes one or more of the molding temperature, the molding pressure and density of the porous carbon article. Put another way, expanding the processing parameter window would normally debit the strength. However, by using the predefined particle size distribution, the processing parameter window or windows can be expanded while at least maintaining the same strength relative to the unexpanded processing parameter window or windows. The term "expanded" or variations thereof used to describe the processing parameter windows refers to the use of broader process setting ranges. For instance, if the molding pressure of a given process is initially 68,9 - 103,4 kPa (10-15 pounds per square inch) an expanded window would be 55,1 - 117,2 kPa (8 - 17 PSI). In a further example, the expanded processing parameter window enlarges at least one end of the window range by 10% or more, or alternatively by 30% or more. Such expansions are typically not possible without sacrificing strength of the porous article.

The expansion of the processing parameter window or windows is further illustrated in Figure 3, which shows a graph of bending strength of porous articles versus density of the porous articles. In Figure 3, the line 240 represents the strength trend of a porous article that is formed from loose resin particles that are outside the disclosed predefined particle size distribution. Line 250 represents the strength trend of a porous article made using loose resin particles within the disclosed predefined particle size distribution. As shown, using particles within the predefined particle size distribution shifts the strength upwards. Moreover, for a given strength, a less dense porous article is required to achieve that strength. Similarly, for a given density, the porous articles made using particles within the predefined particle size distribution are stronger than porous articles made using particles that are outside the disclosed predefined particle size distribution. For instance, a porous article that is made without using particles within the predefined particle size distribution disclosed herein must meet a target density of 1.57- 1.63 grams per cubic centimeters to meet a given strength target. However, for a porous article that is made by using particles within the predefined particle size distribution disclosed herein, the target density is expanded to 1.55-1.63 grams per cubic centimeter. This represents an increase in target density range of 33%.

Although a combination of features is shown in the illustrated examples, not all of them need to be combined to realize the benefits of various embodiments of this disclosure. In other words, a system designed according to an embodiment of this disclosure will not necessarily include all of the features shown in any one of the Figures or all of the portions schematically shown in the Figures. Moreover, selected features of one example embodiment may be combined with selected features of other example embodiments.

## Claims

1. A method of processing a porous article, the method comprising:
(a) distributing a blended powder material including loose electrically conductive particles and loose resin particles into a mold;
(b) consolidating the blended powder material within the mold under a molding pressure and a molding temperature into a consolidated article,
**characterized by**
(c) selecting the loose resin particles in step (a) to be within a predefined particle size distribution to control a physical property, namely the strength, of the porous article,
wherein the predefined particle size distribution includes 95% by volume of the loose resin particles being 22 micrometers or less in average diameter, and wherein the standard deviation of the average diameter is 6 micrometers or less.

## Patentansprüche

1. Verfahren zur Verarbeitung eines porösen Gegenstandes, wobei das Verfahren umfasst:
(a) Verteilen eines gemischten Pulvermaterials, das lose elektrisch leitfähige Teilchen und lose Harzteilchen enthält, in einer Form;
(b) Verfestigen des gemischten Pulvermaterials innerhalb der Form unter einem Formdruck und einer Formtemperatur zu einem verfestigten Gegenstand,
**gekennzeichnet durch**
(c) Auswählen der losen Harzteilchen in Schritt (a), um innerhalb einer vorbestimmten Teilchengrößenverteilung zu liegen, um eine physikalische Eigenschaft, nämlich die Festigkeit, des porösen Gegenstandes zu steuern, wobei die vorbestimmte Teilchengrößenverteilung 95 Vol.-% der losen Harzteilchen mit einem mittleren Durchmesser von 22 Mikrometern oder weniger umfasst,
und wobei die Standardabweichung des mittleren Durchmessers 6 Mikrometer oder weniger beträgt.

## Revendications

1. Procédé de fabrication d'un article poreux, le procédé comprenant :
(a) répartir une matière en poudre mélangée incluant des particules électriquement conductrices libres et des particules de résine libres dans un moule ;
(b) consolider la matière en poudre mélangée à l'intérieur du moule sous une pression de moulage et une température de moulage en un article consolidé, **caractérisé par**
(c) sélectionner les particules de résine libres dans l'étape (a) pour qu'elles aient une distribution de taille de particule prédéfinie pour contrôler une propriété physique, à savoir la résistance, de l'article poreux,
dans lequel la distribution de taille de particules prédéfinie comprend 95% en volume de particules de résine libres ayant un diamètre égale ou moyen inférieur à 22 micromètres, et dans lequel l'écart-type du diamètre moyen est égal ou inférieur à 6 micromètres.
